# EUROPEAN PATENT SPECIFICATION

(11) **EP 2 834 285 B1**
(45) Date of publication and mention of the grant of the patent: **09.03.2016**
(21) Application number: 13718793.6
(22) Date of filing: 22.03.2013
(51) Int. Cl.: C08G 65/00, C08G 65/30

(54) **PROCESS FOR THE CONTINUOUS PRODUCTION OF POLYETHEROLS**
VERFAHREN ZUR KONTINUIERLICHEN PRODUKTION VON POLYETHEROLEN
PROCESSUS DE PRODUCTION EN CONTINU D'ALCOOLS DE POLYÉTHER

(30) Priority: 03.04.2012 EP 12163028
(43) Date of publication of application: 11.02.2015
(73) Proprietor: BASF SE, 67056 Ludwigshafen (DE)
(72) Inventor: CHILEKAR, Vinit, 3080 Tervuren (BE); WISS, Kerstin, 68165 Mannheim (DE); GROßE, Julia Frauke, 68163 Mannheim (DE); DEGLMANN, Peter, 68163 Mannheim (DE); LÖFFLER, Achim, 67346 Speyer (DE)
(86) International application number: PCT/EP2013/056105
(87) International publication number: WO 2013/149860

(56) References cited:
- EP-A2- 2 177 555
- WO-A1-2009/056513
- WO-A1-2009/077517
- US-A- 3 346 557
- US-A- 3 510 471
- US-A- 4 332 936

## Description

The present invention relates to a process for the continuous production of polyether alcohols by catalyzed addition of at least one alkylene oxide to at least one hydrogen-functional starter compound, wherein at least one catalyst exhibits the structural element R1/R2C=N-R3.

Polyetherols, also called polyether polyols, polyether alcohols or, more general, polyols, are manufactured in large quantities and are widely used, for example for manufacturing polyurethanes (PU). For specific PU applications, specific polyetherols are needed. For example, for the manufacture of rigid foam PU polyols with a high functionality are required, whereas polyols with a low functionality may be used for the manufacture of soft PU foams.

In the context of the present invention, "rigid foam PU" in particular refers to foams manufactured from polyols with a functionality of 3.5 to 8 and an OH number of 150 to 800, and "soft PU foams" in particular refers to foams manufactured from polyols with a functionality of 2 to 4 and an OH number of 30 to 150.

Just to give an example, one kind of polyetherols are sugar-glycerine- and/or toluene-diamine (TDA)- and/or sorbitol-initiated polyetherols. (TDA includes, for example, vicinal TDA (vicTDA), which refers to the 2,3- and 3,4-isomers of TDA, meaning that the amine substituents are located at neighbouring carbon atoms.)

These sugar-glycerine- and/or vicinal toluene-diamine and or sorbitol initiated polyetherols are frequently used in polyurethane foam applications, mainly in rigid foam applications.

Conventionally used alkoxylation catalysts, like KOH, have some disadvantages. For example, KOH-catalyzed processes usually require a tedious work-up after the reaction (by neutralization and filtration). Besides, alkoxylation catalysts like KOH lead to broad molecular weight distributions and thus to inacceptable product quality for polyols for rigid foam PU.

The production of polyols by catalyzed alkoxylation of a starter compound is conventionally done in a batch or semi-batch process. For example, WO 2009/ 056513 A1 (Shell) describes alkoxylation reactions in a semi-batch process.

However, batch and semi-batch processes also have some disadvantages. For example, in semi-batch processes the production equipment, e. g. reactors, frequently has to be cleaned after each batch, leading to more downtime in the production plant and lower space time yield.

Furthermore, when using starter compounds with a tendency to decompose, for example at higher temperatures, the free content of these starters should be limited in the process, in order to avoid security problems, which is difficult in a batch or semi-batch process. An example for starter compounds with a tendency to decompose at higher temperatures are sugars, as for example used in WO 2009/ 077517 A1 (see, e. g., example 2 of WO 2009/ 077517 A1, where sorbitol is used).

Thus, the objective of the present invention was to develop a process which allows alkoxylation also at higher reaction temperatures and which works also for starters with a tendency to decompose, and which gives access to products with higher molecular weights with short manufacturing times using low catalyst loadings in order to minimize the effect of the catalyst on the polyol reactivity.

The problems mentioned above could surprisingly be solved by a continuous process for the production of polyether alcohols using, inter alia, amidine catalysts, in some cases at higher temperatures.

The newly found process allows to limit the free content of starters with a tendency to decompose. Besides, the inventive catalysts may usually remain in the product, thus making additional process steps for removing the catalyst unnecessary.

In a recent patent application (WO 2013/014153), the use of imidazole based catalysts for this purpose is discussed. Although this type of catalysts combines several favorable properties for a continuous process, it is clear that one narrow class of catalysts will not be optimal for all types of polyetherol products. Therefore, this invention relates to a further class of catalysts, which offers the potential to lead - polyetherol dependent - to e.g. higher space time yield upon production, a less colored product or a lower reactivity upon further processing to polyurethane. With more classes of catalyst in hand, one also gains more flexibility in the polyetherol for the formulation of the polyurethane systems in terms of reactivity, demold time, flowability, and compatibility with the blowing agent.

Thus, the object of the present invention is a process for the continuous production of polyether alcohols by catalyzed addition of at least one alkylene oxide to at least one hydrogen-functional starter compound, wherein at least one catalyst, preferably all of the used catalysts, exhibit(s) the structural element R1/R2C=N-R3, wherein R1 and R2 are independently of each other selected from the group consisting of alkyl, aryl, arenyl, H, dialkylamino, especially preferably alkyl or dialkylamino, and wherein R3 is selected from the group consisting of alkyl, aryl, H, dialkylamino, especially preferably alkyl.

In a preferred embodiment of the inventive process, a ring is formed between R1 and R2, between R1 and R3 or between R2 and R3, especially preferably between R1 and R3 or between R2 and R3.

In another preferred embodiment of the inventive process, at least one catalyst, especially preferably all of the used catalysts, is/are a substituted pyridine.

In another preferred embodiment of the inventive process, at least one catalyst, preferably all of the used catalysts, is/are a substituted amidine, especially preferably selected from the group consisting of substituted cyclic amidines, very especially preferably from the group consisting of substituted cyclic amidines wherein there is no ring formation between the nitrogens by alkenyl groups as e.g. in imidazoles.

In a preferred embodiment of the inventive process, at least one catalyst is selected from the group of guanidines, derivatives of guanidines and mixtures thereof.
In the context of the present invention, guanidines are considered as one type of amidines, since guanidines may be regarded as amidines of carbamoic acid.

It is preferred that all of the catalysts used in the inventive process for the continuous production of polyether alcohols are selected from the list consisting of amidines, derivatives of amidines and mixtures thereof.

In a preferred embodiment of the inventive process, only one catalyst is used.
In another embodiment of the inventive process, two or more catalysts are used.

In a particularly preferred embodiment of the inventive process for the continuous production of polyether alcohols by catalyzed addition of at least one alkylene oxide to at least one hydrogen-functional starter compound, all of the used catalysts are selected from the list consisting of TMG (tetramethylguanidine), DBU (1,8-diazabicyclo[5.4.0]undec-7-ene), DBN (1,5-diazabicyclo[4.3.0]non-5-ene), and mixtures thereof.

In the embodiment where at least one catalyst is selected from the group of guanidines, the catalyst may optionally be liberated from a guanidinium salt, for example a hydrochloride salt of the guanidine catalyst. In this case, the salts are preferably neutralized before use or in situ, for example with alkali bases like sodium hydroxide.

In the inventive process, at least one catalyst, preferably all of the used catalysts, is/are not selected from the group of imidazoles and derivatives of imidazoles.

The catalyst may also be produced in situ, in one embodiment of the inventive process.

The temperature during the reaction in the inventive process is above 115 °C, preferably at least 120 °C and even more preferably at least 125 °C.

The complete process is continuous from feeding the starters until stripping out PO and water.
There is no starter dehydration as in the KOH catalyzed process, and there is no catalyst removal at the end of the process.

The inventive process can be carried out in a series of continuous reactor cascades consisting of stirred tank reactors and tubular reactors. The other reactor types which could be used for the reaction are the jet loop reactors, Buss reactors, compartment reactors, compartment reactors with one or more backmixed compartments, bubble column reactors, cascaded bubble column reactors, a loop reactor with static mixing elements, baffled tubular reactors with oscillating flow, or a combination of the above mentioned reactors in one or more hybrid reactor.

In a preferred embodiment of the inventive process, at least one continuously stirred tank reactor (CSTR) and/or at least one plug flow reactor (PFR) is used.

In another preferred embodiment of the present invention, a series of continuously stirred tank reactors (CSTRs), or a series of plug flow reactors (PFRs) or a combination of CSTRs with plug flow reactors (PFRs) are used, having multiple feeds of raw materials or product outlets from the reactor series.

The preferred process contains at least 2 continuously stirred tank reactors (CSTRs) in series followed by at least 1 plug flow reactor (PFR). Continuously stirred tank reactors are characterized by a broad residence time distribution (Ref: 1. Chemical reaction engineering, Octave Levenspiel, Wiley and Sons., 3rd Edition, 1999, pg: 266, 2. Perry's Chemical Engineers Handbook, Stanley Walas, McGraw Hill, 7th edition, 1998, section 23, pg: 23-18), meaning a broad range of polymerization degrees (Ref: Model Reactors and Their Design Equations, Vladimir Hlavacek1, Jan A. Puszynski2, Hendrik J. Viljoen3, Jorge E. Gatica4 Published Online: 15 JUN 2000 DOI: 10.1002/14356007.b04_121) in the reactor at steady state as compared to the plug flow reactor which is characterized by a narrow residence time distribution meaning different degree of polymerization at different points along the length of the reactor. The CSTRs offers better conversion of solid starters due to intensive mixing which is not possible in the plug flow reactors due to segregation of solid starters from the rest of the polyol during the flow through the reactors. One or more CSTRs are used to achieve more than 50% conversion of alkylene oxide fed to the process, preferably more than 70% conversion and most preferably more than 80% conversion of alkylene oxide.

Thus, the use of at least one CSTR offers the advantage of being able to use all sorts of hydrogen-functional starter compounds in a continuous process, including starter compounds which are solid at room temperature.

Said temperature during the reaction is of the reaction mixture. So the temperature would, in one embodiment, be measured in those two CSTRS and at the entrance of the PFR.
The temperature is measured with a temperature sensor in each of the reaction compartments.

Surprisingly it was found that catalysts selected from the group mentioned above and mixtures thereof allow continuous alkoxylation at higher reaction temperatures and thereby giving short residence times. The various advantages are listed below:
- Surprisingly it was found that the process catalyzed by the specific catalysts mentioned above works smoothly at temperatures above 115 °C.
- Using one of the specific catalysts mentioned above at high temperatures gives access to products with a molecular weight of > 600 g/mol, with much shorter residence times in the continuous process.
- In addition it was found that the process runs at very low catalyst concentration of 0.007-0.5wt%, preferably 0.007 to 0.4 wt%, using one of the specific catalysts mentioned above. The low catalyst concentration has little influence on the polyol reactivity in PU reaction, thus a further catalyst removal step is obsolete.

In a preferred embodiment of the present invention, at least one of the hydrogen-functional starter compounds is solid at room temperature.

In a particularly preferred embodiment of the present invention, the solid hydrogen-functional starter compound is converted to a paste, wherein this paste is continuously added to the reactor vessel.

In a particularly preferred embodiment of the present invention, the paste is manufactured by mixing of the solid hydrogen-functional starter compound at room temperature with a compound liquid at room temperature or at elevated temperature.

In the context of the present invention, "paste" refers to mixtures of compounds solid at room temperature with compounds liquid at room temperature, each containing hydrogen atoms reactive with alkylene oxides. The compounds solid at room temperature are present in the form of particles with an average particle size of less than 2 mm. The mixtures are pumpable.

"Pumpable" means, in the context of the present invention, that the viscosity of the paste is at most 100 000 mPa.s, preferably 40 000 mPa.s, most preferably 15000 mPas. A viscosity like this may be reached already at room temperature. If this is not the case, the viscosity may be adjusted by elevating the temperature; the determination of the viscosity is according to DIN 53019 (DIN = "Deutsche Industrienorm", German industry norm):

Preferably, the paste is manufactured using a shear force mixer.

The solid starter could also be added to the process using a rotor stator dispersion machine or a dispersion pump which disperses the crystals or powdered starter in the liquid phase in the process (liquid starter, reaction mixture in one of the reactors, intermediate product or end product or a combination of at least two of above mentioned liquids). The solid raw material could also be added to the reactor by passing it through a fast melting nozzles to melt the solid starter and feed it to the process in a very short time.

In the present invention, the catalyst concentration is in the range of 0.007-0.5 % mass, particularly preferably 0.07 to 0.4 % mass of the throughput of the continuous process.

The catalyst is added as a solid or liquid in the reactor or in the paste, or fed directly to the process, optionally as a melt or dissolved in water or any other solvent, or as a mixture with other liquid.

In a preferred embodiment of the present invention, polyether alcohols with an OH number <1000 mg KOH/ g, more preferably <500 mg KOH/g are produced.

The OH number is determined according to DIN EN 1240:2010 (DIN = "Deutsche Industrie-norm", Germany industry standard).

In a preferred embodiment of the present invention, at least one alkylene oxide is selected from the group consisting of ethylene oxide, propylene oxide, butylene oxide, and mixtures thereof. More preferably, all of alkylene oxides used in the inventive process are selected from the group consisting of ethylene oxide (EO), propylene oxide (PO), butylene oxide (BO), and mixtures thereof.

In a particularly preferred embodiment of the present invention, one alkylene oxide is used, wherein this alkylene oxide is propylene oxide.

The PO may have been produced using the HPPO (hydrogen peroxide based propylene oxide) or the SMPO (styrene monomer PO) process or the chlorohydrin process.

In a preferred embodiment of the present invention, at least one hydrogen-functional starter compound is selected from the group consisting of NH- and OH-functional compounds, and mixtures thereof. More preferably, all of the hydrogen-functional starter compounds are selected from the group consisting of NH- and OH-functional compounds, and mixtures thereof.
In another preferred embodiment of the present invention, at least one hydrogen-functional starter compound is selected from the group consisting of NH-functional compounds, and mixtures thereof. More preferably, all of the hydrogen-functional starter compounds are selected from the group consisting of NH-functional compounds, and mixtures thereof.

In another preferred embodiment of the present invention, at least one hydrogen-functional starter compound is selected from the group consisting of OH-functional compounds, and mixtures thereof. More preferably, all of the hydrogen-functional starter compounds are selected from the group consisting of OH-functional compounds, and mixtures thereof.

In a preferred embodiment, the OH-functional compounds may be selected from the group consisting of carbohydrates.

In another preferred embodiment of the inventive process, the OH-functional compounds may be selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof.

Preferably, the NH-functional compounds compounds may be selected from the group consisting of aliphatic amines, aromatic amines, aminoalcohols, and mixtures thereof.

Particularly preferred are NH-functional compounds selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), urea and its derivatives, melamine, phenylcyclohexylamine, and mixtures thereof.
In case of TDA, the vicinal isomers are preferred.

In a preferred embodiment of the inventive process, at least one hydrogen-functional starter compound is selected from the group containing compounds with a functionality of more than 3.5, more preferably in the range of 4 to 6.5.

In a preferred embodiment of the present invention, at least one hydrogen-functional starter compound, and more preferred all of the hydrogen-functional starters, is/are selected from the group consisting of crystal sugar, powdered sugar, a slurry of sugar in other liquid starters, a sugar syrup and a sugar paste. Especially preferably, at least one hydrogen-functional starter compound, and more preferred all of the hydrogen-functional starters, is/are a sugar paste.

One object of the present invention is also a polyether alcohol, obtainable by the inventive process for the continuous production of polyether alcohols by catalyzed addition of at least one alkylene oxide to at least one hydrogen-functional starter compound.

A further object of the present invention is the use of a polyether alcohol, obtainable by the inventive process, for the manufacture of polyurethanes.

Another object of the present invention is a process for the manufacture of polyurethanes, by reacting at least one polyisocyanate or diisocyanate with at least one polyether alcohol, obtainable by the inventive process.

In a preferred embodiment of the present invention, the polyurethane is a rigid foam polyurethane.

In a preferred embodiment of the present invention, the rigid foam polyurethane obtainable by the inventive process for the continuous production of polyether alcohols is used in the field of automotive, construction or appliance systems.

In the preferred embodiment of the present invention, the start-up, shut-down, re-start of the process in case of intermediate stoppage or product change in the process consisting of two or more reactors is done as it would be usually done for a continuous process by a skilled person.

The start-up of the continuous process could be carried out in two ways:
1) All reactors are filled with the product that needs to be produced in the process and the reactors are tempered to the reaction temperature and the feed of H-functional starter, catalyst and alkylene oxide are started to the first reactor at 100% of required feed rate. Instead of the final product the reactors could also be filled with an intermediate product if available, which is having lower molecular weight than the targeted final product. At the start-up of the process some catalyst could be pre-charged to the first reactor and/or to other reactors in the process. The amount of catalyst could vary from about 50%-500% of the amount required in the end product, preferably 80%-400% and most preferably between 100% - 300%. It is also possible to reduce the AO, catalyst and starter feed at lower feed rates and reach the 100% of required feed rate in a short time of maximum 6 hours after continuous start of at least one feed to the process. Instead of pre-charging the catalyst to the reactors, the catalyst could be continuously added to the first reactor at a higher dosing rate than 100% for the maximum time of 6 hrs, while adding starter and AO at 100% feed rate. The catalyst feed rate is then reduced to the 100% feed rate required in the recipe of the targeted product.
2) Only the first reactor is filled with the product that needs to be produced. All reactors are tempered to the reaction temperature and the feed of H-functional starter, catalyst and alkylene oxide are started to the first reactor at 100% of required feed rate. After the continuous feed is started to the process, the product from the first reactor is continuously transferred to the second reactor to fill it up to the required filling level. Once the second reactor is filled the product is transferred to the next reactor in the process and thus all reactors are filled up to get the final product out of the last reactor of the process. Thus each reactor is fed with the product when the subsequent reactor is filled to the required filling level. Instead of the end product the first reactor could also be filled with an intermediate product which is having lower molecular weight than the targeted final product. At the start of the process some catalyst could be pre-charged to the first reactor and/or to other reactors in the process. The amount of catalyst could vary from about 50%-500% of the amount required in the end product, preferably 80%-400% and most preferably between 100% - 300%. It is also possible to reduce the AO, catalyst and starter feed at lower feed rates and reach the 100% of required feed rate in a short time of maximum 6 hours after continuous start of at least one feed to the process. Instead of pre-charging the catalyst to the reactors, the catalyst could be continuously added to the first reactor at a higher dosing rate than 100% for the maximum time of 6 hrs, while adding starter and AO at 100% feed rate. The catalyst feed rate is then reduced to the 100% feed rate required in the recipe of the targeted product.

In case of shut down, all feed to the process are stopped instantaneously or one after other within a short span of maximum 6 hrs after first feed is stopped. The product is continuously collected from the last reactor of the process. The first reactor is emptied with the constant flow rate to the second reactor. The second reactor is emptied to the next one and eventually the last reactor is emptied out. Once all reactors are emptied the reactors are cooled down if no immediate start-up of the plant is planned in the next 96 hrs.

In case of a disturbance in the process, all feeds are stopped and the reactors are not emptied as described above for shut-down of the plant. The temperatures of all reactors are maintained constant to the reaction temperature. If the plant has to be re-started in less than 6 hrs after all the feeds were stopped, then all feeds to the process are started at the same time and set to 100% of the required feed rate and the product is collected from the last reactor of the process. If the plant is re-started more than 6 hrs after the feeds were stopped then it is preferable to charge additional catalyst to the first and/or other reactors before the continuous feed of starter, catalyst and AO is started to the process.

The continuous plant as describe above could be used to produce a single product or more than one product. In case of more than one product the plant has to be switched from one product to another product. The product switching could be done in three different ways as follows:
1) Switching from one product to a second one could either be done on the fly i.e. directly changing the feed rates of the starter, catalyst and AO to the required feed rates of the second product that needs to be produced. During this product switching procedure, the product which is off-spec from the first product and the second product should be collected separately as off-spec product.
2) The other way to switch the products would be to shut-down the plant using one of the above mentioned shut-down procedures and remove the first product completely from the plant. Intermediate washing of the plant could be done if no cross contamination between the two products is tolerated. The plant could then be started up again for the second product using the above mentioned procedures for the start-up of the plant. In this case very less amount of off-spec product is produced.
3) Another way to switch the products would be to shut down the feeds to the process. Empty the first reactor continuously to the second reactor while collecting the first product from the process. Empty the second reactor to the next one and continue so on until the last reactor is emptied with a constant flow rate equal to the production rate of the process. As soon as the first reactor is empty, fill the first reactor with the second product that needs to be produced.

As soon as the second reactor is emptied and is free of the first product, start all feeds to the first reactor with required feed rates for the second product and continuously transfer the product to the second reactor until it is filled. Similarly fill up the following reactors until all reactors are filled with the second product and the second product is collected continuously at the end of the process. This way all the reactors are sequentially emptied of the first product and filled with the second product with minimum production loss between the product switching.

### Examples

In the following, some examples are given in order to illustrate some aspects of the present invention. However, these examples are in no way meant to limit the scope of the present invention.

### Example 1:

A mixture of sucrose and glycerin (ratio 67/33) was produced in a shear force mixer and pumped in the external circulation loop of a continuously stirred tank reactor (CSTR) (600 liter) using a positive displacement pump.

Dimethlyethanolamine (0.75 wt% of total feed to the CSTR) and propylene oxide was continuously added to the CSTR using Lewa pumps. The total mass flow was about 55 kg/h. Part of this mixture was continuously fed to a tubular reactor (volume 200 liter) in order to achieve full conversion of PO. The unconverted propylene oxide was continuously removed in a stripping vessel under vacuum (50 mbar). The reaction temperature was 110 °C in the CSTR as well as in the tubular reactor. The product was not worked-up. The reaction product that was obtained during the steady state operation (after 5 residence times) was analyzed.

Other experiments were carried out with 50% solution of DBU (1,8-diazabicyclo[5.4.0]undec-7-en, CAS: 6674-22-2) or DBN (1,5-diazabicyclo[4.3.0]non-5-en, CAS: 3001-72-7) or TMG (1,1,3,3-tetramethyl guanidine, CAS: 80-70-6) as well as with pure DMAP (4-(*N*,*N-*dimethylamino)pyridine, CAS 1122-58-3) or DMA (*N,N*-dimethyl aniline, CAS 121-69-7)with the same recipe as described above but with slightly higher temperatures as given below. The product from these experiments was analyzed and the results are shown in the table below.

| Experiment | Catalyst | Reaction temperature °C | Catalyst concentration, wt% | OH number mg KOH/g | Free PO concentration wt% | Viscosity @ 25°C mPas |
|---|---|---|---|---|---|---|
| 1 | DMEOA | 110 | 0.75 | 398 | 11.5 | 6814 |
| 2 | DBU | 125 | 0.15 | 356 | 6.5 | 3912 |
| 3 | DBU | 135 | 0.15 | 342 | 4.1 | 3561 |
| 4 | DBN | 125 | 0.15 | 355 | 6.8 | 3860 |
| 5 | TMG | 130 | 0.15 | 362 | 7.1 | 4050 |
| 6 | TMG | 140 | 0.15 | 365 | 7.3 | 4073 |
| 7 | DMAP | 120 | 0.15 | 352 | 6.2 | 3790 |
| 8 | DMA | 120 | 0.15 | 424 | 12.3 | 8324 |

The examples 1 to 7 show that the necessary catalyst concentration is lower when using DBU, DBN, TMG or DMAP as catalyst, compared to the use of DMEOA catalyst.
Example 7 with DMAP in contrast to example 8 with DMA, shows that the catalytic activity of DMAP mainly comes from the aromatic and cyclic imine group rather than from the tertiary amine group present in both structures.

## Claims

1. A process for the continuous production of polyether alcohols by catalyzed addition of at least one alkylene oxide to at least one hydrogen-functional starter compound, wherein at least one catalyst exhibits the structural element R1/R2C=N-R3, and wherein R1 and R2 are independently of each other selected from the group consisting of alkyl, aryl, arenyl, H, dialkylamino, and wherein R3 is selected from the group consisting of alkyl, aryl, H, dialkylaminon, and wherein at least one catalyst is not selected from the group of imidazoles and derivatives of imidazoles, and wherein the temperature during the reaction is above 115 °C, and wherein the catalyst concentration is in the range of 0,007 to 0,5%, preferably in the range of 0,007 to 0, 4 % mass of the throughput of the continuous process.

2. A process for the continuous production of polyether alcohols according to claim 1, wherein all of the used catalysts exhibit the structural element R1/R2C=N-R3.

3. A process for the continuous production of polyether alcohols according to claim 1 or 2, wherein R1 and R2 are independently of each other selected from the group consisting of alkyl and dialkylamino.

4. A process for the continuous production of polyether alcohols according to any of the preceding claims, wherein R3 is alkyl.

5. A process for the continuous production of polyether alcohols according to any of the preceding claims, wherein a ring is formed between R1 and R2, between R1 and R3 or between R2 and R3, preferably between R1 and R3 or between R2 and R3.

6. A process for the continuous production of polyether alcohols according to claim 1 or 2, wherein at least one catalyst is a substituted pyridine.

7. process for the continuous production of polyether alcohols according to claim 6, wherein all of the used catalysts are substituted pyridines.

8. A process for the continuous production of polyether alcohols according to claim 1 or 2, wherein at least one catalyst is a substituted amidine, preferably selected from the group consisting of substituted cyclic amidines, especially preferably from the group consisting of substituted cyclic amidines wherein there is no ring formation between the nitrogens by alkenyl groups.

9. A process for the continuous production of polyether alcohols according to claim 8, wherein all of the used catalysts are substituted amidines.

10. A process for the continuous production of polyether alcohols according to claim 1 or 2, wherein at least one catalyst is selected from the group of guanidines, derivatives of guanidines and mixtures thereof.

11. A process for the continuous production of polyether alcohols according to claim 10, wherein all of the used catalysts are selected from the group of guanidines, derivatives of guanidines and mixtures thereof.

12. process for the continuous production of polyether alcohols according to claim 10 or 11 wherein the guanidine has no hydrogen on any of the nitrogen atoms or wherein the guanidine contains at least one ring formation between the alkyl groups.

13. A process for the continuous production of polyether alcohols according to claim 1 or 2, wherein all of the used catalysts are selected from the list consisting of TMG (tetramethylguanidine), DBU (1,8-diazabicyclo[5.4.0]undec-7-ene), DBN (1,5-diazabicyclo[4.3.0]non-5-ene), and mixtures thereof.

14. A process for the continuous production of polyether alcohols according to any of the preceding claims, wherein none of the used catalysts is selected from the group of imidazoles and derivatives of imidazoles.

15. Process for the continuous production of polyether alcohols according to any of the preceding claims, wherein the temperature during the reaction is at least 125 °C.

16. Process according to any of the preceding claims, wherein the catalyst is fed as a solid or paste or as a liquid feed as a melt, or dissolved in a solvent or water or mixed with other liquid feed in the reactor.

17. A process for the continuous production of polyether alcohols according to any of the preceding claims, wherein at least one of the hydrogen-functional starter compounds is solid at room temperature.

18. Process for the continuous production of polyether alcohols according to claim 17, wherein the solid hydrogen-functional starter compound is converted to a paste, and wherein this paste is continuously added to the reactor vessel.

19. Process for the continuous production of polyether alcohols according to claim 18, wherein the paste is manufactured by mixing of the solid hydrogen-functional starter compound at room temperature with a compound liquid at room temperature or at elevated temperature.

20. Process for the continuous production of polyether alcohols according to any of the preceding claims, wherein at least one hydrogen-functional starter compound is selected from the group consisting of NH- and OH-functional compounds, and mixtures thereof.

21. Process for the continuous production of polyether alcohols according to any of the preceding claims, wherein at least one hydrogen-functional starter compound is selected from the group consisting of NH-functional compounds.

22. Process for the continuous production of polyether alcohols according to any of the preceding claims, wherein at least one hydrogen-functional starter compound is selected from the group consisting of OH-functional compounds.

23. Process for the continuous production of polyether alcohols according to claim 22, wherein the OH-functional compounds are selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof.

24. Process for the continuous production of polyether alcohols according to claim 21, wherein the NH-functional compounds are selected from the group consisting of aliphatic amines, aromatic amines, aminoalcohols, and mixtures thereof.

25. Process for the continuous production of polyether alcohols according to claim 21, wherein the NH- functional compounds are selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), melamine, phenylcyclohexylamine.

26. Process for the continuous production of polyether alcohols according to any of the preceding claims, wherein at least one hydrogen-functional starter compound is selected from the group consisting of compounds with an average functionality of more than 3,5.

27. Process for the continuous production of polyether alcohols according to any of the preceding claims, wherein at least one alkylene oxide is selected from the group consisting of ethylene oxide, propylene oxide, butylene oxide, and mixtures thereof, preferably mixtures containing propylene oxide.

28. Process for the continuous production of polyether alcohols according to any of the preceding claims, wherein one alkylene oxide is used, and wherein this alkylene oxide is propylene oxide.

29. Process for the continuous production of polyether alcohols according to any of the preceding claims, wherein at least one continuously stirred tank reactor (CSTR) is used.

30. Proceess for the continuous production of polyether alcohols according to any of claims 1 to 28, wherein a series of continuously stirred tank reactors (CSTRs) or plug flow reactors (PFRs) or a combination of both types of reactors are used, having multiple feed of raw materials or product outlets from reactor series.

31. Process for the continuous production of polyether alcohols according to any of claims 1 to 28, wherein a series of continuously stirred tank reactors (CSTRs) or a combination of CSTRs with plug flow reactors (PFRs) are used, having multiple feed of raw materials or product outlets from reactor series.

32. Process for the continuous production of polyether alcohols according to any of the preceding claims, wherein polyether alcohols with a OH number < 1000 mg KOH/g are produced.

## Patentansprüche

1. Verfahren zur kontinuierlichen Herstellung von Polyetheralkoholen durch katalysierte Addition mindestens eines Alkylenoxids an mindestens eine wasserstofffunktionelle Starterverbindung, wobei mindestens ein Katalysator das Strukturelement R1/R2C=N-R3 aufweist und wobei R1 und R2 unabhängig voneinander aus der Gruppe bestehend aus Alkyl, Aryl, Arenyl, H und Dialkylamino ausgewählt sind und wobei R3 aus der Gruppe bestehend aus Alkyl, Aryl, H und Dialkylamino ausgewählt ist und wobei mindestens ein Katalysator nicht aus der Gruppe der Imidazole und Derivate von Imidazolen ausgewählt ist und wobei die Temperatur während der Reaktion über 115°C liegt und wobei die Katalysatorkonzentration im Bereich von 0,007 bis 0,5 Massen-%, vorzugsweise im Bereich von 0,007 bis 0,4 Massen-%, des Durchsatzes des kontinuierlichen Verfahrens liegt.

2. Verfahren zur kontinuierlichen Herstellung von Polyetheralkoholen nach Anspruch 1, wobei alle der verwendeten Katalysatoren das Strukturelement R1/R2C=N-R3 aufweisen.

3. Verfahren zur kontinuierlichen Herstellung von Polyetheralkoholen nach Anspruch 1 oder 2, wobei R1 und R2 unabhängig voneinander aus der Gruppe bestehend aus Alkyl und Dialkylamino ausgewählt sind.

4. Verfahren zur kontinuierlichen Herstellung von Polyetheralkoholen nach einem der vorhergehenden Ansprüche, wobei R3 für Alkyl steht.

5. Verfahren zur kontinuierlichen Herstellung von Polyetheralkoholen nach einem der vorhergehenden Ansprüche, wobei ein Ring zwischen R1 und R2, zwischen R1 und R3 oder zwischen R2 und R3, vorzugsweise zwischen R1 und R3 oder zwischen R2 und R3, gebildet ist.

6. Verfahren zur kontinuierlichen Herstellung von Polyetheralkoholen nach Anspruch 1 oder 2, wobei es sich bei mindestens einem Katalysator um ein substituiertes Pyridin handelt.

7. Verfahren zur kontinuierlichen Herstellung von Polyetheralkoholen nach Anspruch 6, wobei es sich bei allen der verwendeten Katalysatoren um substituierte Pyridine handelt.

8. Verfahren zur kontinuierlichen Herstellung von Polyetheralkoholen nach Anspruch 1 oder 2, wobei es sich bei mindestens einem Katalysator um ein substituiertes Amidin handelt, das vorzugsweise aus der Gruppe bestehend aus substituierten cyclischen Amidinen ausgewählt wird und besonders bevorzugt aus der Gruppe bestehend aus substituierten cyclischen Amidinen, bei denen keine Ringbildung zwischen den Stickstoffatomen durch Alkenylgruppen vorliegt, ausgewählt wird.

9. Verfahren zur kontinuierlichen Herstellung von Polyetheralkoholen nach Anspruch 8, wobei es sich bei allen der verwendeten Katalysatoren um substituierte Amidine handelt.

10. Verfahren zur kontinuierlichen Herstellung von Polyetheralkoholen nach Anspruch 1 oder 2, wobei mindestens ein Katalysator aus der Gruppe der Guanidine, Derivate von Guanidinen und Mischungen davon ausgewählt wird.

11. Verfahren zur kontinuierlichen Herstellung von Polyetheralkoholen nach Anspruch 10, wobei alle der verwendeten Katalysatoren aus der Gruppe der Guanidine, Derivate von Guanidinen und Mischungen davon ausgewählt werden.

12. Verfahren zur kontinuierlichen Herstellung von Polyetheralkoholen nach Anspruch 10 oder 11, wobei das Guanidin keinen Wasserstoff an einem der Stickstoffatome aufweist oder wobei das Guanidin mindestens eine Ringbildung zwischen den Alkylgruppen enthält.

13. Verfahren zur kontinuierlichen Herstellung von Polyetheralkoholen nach Anspruch 1 oder 2, wobei alle der verwendeten Katalysatoren aus der Liste bestehend aus TMG (Tetramethylguanidin), DBU (1,8-Diazabicyclo[5.4.0]undec-7-en), DBN (1,5-Diazabicyclo[4.3.0]non-5-en) und Mischungen davon ausgewählt werden.

14. Verfahren zur kontinuierlichen Herstellung von Polyetheralkoholen nach einem der vorhergehenden Ansprüche, wobei keiner der verwendeten Katalysatoren aus der Gruppe der Imidazole und Derivate von Imidazolen ausgewählt wird.

15. Verfahren zur kontinuierlichen Herstellung von Polyetheralkoholen nach einem der vorhergehenden Ansprüche, wobei die Temperatur während der Reaktion mindestens 125°C beträgt.

16. Verfahren nach einem der vorhergehenden Ansprüche, wobei der Katalysator in Form eines Feststoffs oder einer Paste oder in Form eines flüssigen Einsatzstoffs in Form einer Schmelze oder in einem Lösungsmittel oder Wasser gelöst oder mit einem anderen flüssigen Einsatzstoff gemischt in den Reaktor eingespeist wird.

17. Verfahren zur kontinuierlichen Herstellung von Polyetheralkoholen nach einem der vorhergehenden Ansprüche, wobei mindestens eine der wasserstofffunktionellen Starterverbindungen bei Raumtemperatur fest ist.

18. Verfahren zur kontinuierlichen Herstellung von Polyetheralkoholen nach Anspruch 17, wobei die feste wasserstofffunktionelle Starterverbindung in eine Paste umgewandelt wird und diese Paste kontinuierlich in den Reaktorbehälter gegeben wird.

19. Verfahren zur kontinuierlichen Herstellung von Polyetheralkoholen nach Anspruch 18, wobei die Paste durch Mischen der festen wasserstofffunktionellen Starterverbindung bei Raumtemperatur mit einer bei Raumtemperatur flüssigen Verbindung oder bei erhöhter Temperatur hergestellt wird.

20. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus NH- und OH-funktionellen Verbindungen und Mischungen davon ausgewählt wird.

21. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus NH-funktionellen Verbindungen ausgewählt wird.

22. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus OH-funktionellen Verbindungen ausgewählt wird.

23. Verfahren zur kontinuierlichen Herstellung von Polyetheralkoholen nach Anspruch 22, wobei die OHfunktionellen Verbindungen aus der Gruppe bestehend aus Pentaerythrit, Sorbit, Saccharose, Cellulose, Stärke, Stärkehydrolysaten, Wasser, Glycerin, Ethylenglykol (EG), Diethylenglykol (DEG), Propylenglykol (PG), Dipropylenglykol (DPG), Butandiol, Polyetherolen und Mischungen davon ausgewählt werden.

24. Verfahren zur kontinuierlichen Herstellung von Polyetheralkoholen nach Anspruch 21, wobei die NHfunktionellen Verbindungen aus der Gruppe bestehend aus aliphatischen Aminen, aromatischen Aminen, Aminoalkoholen und Mischungen davon ausgewählt werden.

25. Verfahren zur kontinuierlichen Herstellung von Polyetheralkoholen nach Anspruch 21, wobei die NHfunktionellen Verbindungen aus der Gruppe bestehend aus Ethan-1,2-diamin (EDA), Ethanolamin, Diethanolamin, Aminophenolen, Aminotoluol, Toluoldiamin (TDA), Anilin, 4,4'-Methylendianilin (MDA), polymerem 4,4'-Methylendianilin (PMDA), Melamin und Phenylcyclohexylamin ausgewählt werden.

26. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus Verbindungen mit einer durchschnittlichen Funktionalität von mehr als 3,5 ausgewählt wird.

27. Verfahren zur kontinuierlichen Herstellung von Polyetheralkoholen nach einem der vorhergehenden Ansprüche, wobei mindestens ein Alkylenoxid aus der Gruppe bestehend aus Ethylenoxid, Propylenoxid, Butylenoxid und Mischungen davon, vorzugsweise Propylenoxid enthaltenden Mischungen, ausgewählt wird.

28. Verfahren zur kontinuierlichen Herstellung von Polyetheralkoholen nach einem der vorhergehenden Ansprüche, wobei ein einziges Alkylenoxid verwendet wird und wobei es sich bei diesem Alkylenoxid um Propylenoxid handelt.

29. Verfahren zur kontinuierlichen Herstellung von Polyetheralkoholen nach einem der vorhergehenden Ansprüche, wobei mindestens ein kontinuierlicher Rührkessel (Continuously Stirred Tank Reactor, CSTR) verwendet wird.

30. Verfahren zur kontinuierlichen Herstellung von Polyetheralkoholen nach einem der Ansprüche 1 bis 28, wobei eine Reihe von kontinuierlichen Rührkesseln (CSTRs) oder Pfropfenströmungsreaktoren (Plug Flow Reactors, PFRs) oder eine Kombination beider Reaktortypen mit mehreren Zuführungen von Ausgangsstoffen oder Produktauslässen aus der Reaktorreihe verwendet werden.

31. Verfahren zur kontinuierlichen Herstellung von Polyetheralkoholen nach einem der Ansprüche 1 bis 28, wobei eine Reihe von kontinuierlichen Rührkesseln (CSTRs) oder eine Kombination von CSTRs mit Pfropfenströmungsreaktoren (PFRs) mit mehreren Zuführungen von Ausgangsstoffen oder Produktauslässen aus der Reaktorreihe verwendet werden.

32. Verfahren zur kontinuierlichen Herstellung von Polyetheralkoholen nach einem der vorhergehenden Ansprüche, wobei Polyetheralkohole mit einer OH-Zahl < 1000 mg KOH/g hergestellt werden.

## Revendications

1. Procédé de production continue de polyétheralcools par addition catalysée d'au moins un oxyde d'alkylène à au moins un composé amorceur à fonctionnalité hydrogène, dans lequel au moins un catalyseur présente l'élément structural R1/R2C=N-R3, et dans lequel R1 et R2 sont choisis indépendamment l'un de l'autre dans le groupe constitué par un alkyle, un aryle, un arényle, H, un dialkylamino, et dans lequel R3 est choisi dans le groupe constitué par un alkyle, un aryle, H, un dialkylamino, et dans lequel au moins un catalyseur n'est pas choisi dans le groupe des imidazoles et dérivés d'imidazoles, et dans lequel la température pendant la réaction est supérieure à 115 °C, et dans lequel la concentration de catalyseur se situe dans la gamme de 0,007 à 0,5 %, de préférence dans la gamme de 0,007 à 0,4 % en masse du débit du procédé continu.

2. Procédé de production continue de polyétheralcools selon la revendication 1, dans lequel tous les catalyseurs utilisés présentent l'élément structural R1/R2C=N-R3.

3. Procédé de production continue de polyétheralcools selon la revendication 1 ou 2, dans lequel R1 et R2 sont choisis indépendamment l'un de l'autre dans le groupe constitué par un alkyle et un dialkylamino.

4. Procédé de production continue de polyétheralcools selon l'une quelconque des revendications précédentes, dans lequel R3 est un alkyle.

5. Procédé de production continue de polyétheralcools selon l'une quelconque des revendications précédentes, dans lequel un cycle est formé entre R1 et R2, entre R1 et R3 ou entre R2 et R3, de préférence entre R1 et R3 ou entre R2 et R3.

6. Procédé de production continue de polyétheralcools selon la revendication 1 ou 2, dans lequel au moins un catalyseur est une pyridine substituée.

7. Procédé de production continue de polyétheralcools selon la revendication 6, dans lequel tous les catalyseurs utilisés sont des pyridines substituées.

8. Procédé de production continue de polyétheralcools selon la revendication 1 ou 2, dans lequel au moins un catalyseur est une amidine substituée, de préférence choisie dans le groupe constitué par les amidines cycliques substituées, mieux encore dans le groupe constitué par les amidines cycliques substituées dans lesquelles il n'y a pas de formation de cycle entre les azotes par des groupes alcényle.

9. Procédé de production continue de polyétheralcools selon la revendication 8, dans lequel tous les catalyseurs utilisés sont des amidines substituées.

10. Procédé de production continue de polyétheralcools selon la revendication 1 ou 2, dans lequel au moins un catalyseur est choisi dans le groupe des guanidines, des dérivés de guanidines et des mélanges de ceux-ci.

11. Procédé de production continue de polyétheralcools selon la revendication 10, dans lequel tous les catalyseurs utilisés sont choisis dans le groupe des guanidines, des dérivés de guanidines et des mélanges de ceux-ci.

12. Procédé de production continue de polyétheralcools selon la revendication 10 ou 11, dans lequel la guanidine n'a pas d'hydrogène sur l'un quelconque des atomes d'azote ou dans lequel la guanidune contient au moins une formation de cycle entre les groupes alkyle.

13. Procédé de production continue de polyétheralcools selon la revendication 1 ou 2, dans lequel tous les catalyseurs utilisés sont choisis dans la liste constituée par la TMG (tétraméthylguanidine), le DBU (1,8-diazabicyclo[5.4.0]undéc-7-ène), le DBN (1,5-diazabicyclo[4.3.0]non-5-ène), et les mélanges de ceux-ci.

14. Procédé de production continue de polyétheralcools selon l'une quelconque des revendications précédentes, dans lequel aucun des catalyseurs utilisés n'est choisi dans le groupe des imidazoles et dérivés d'imidazoles.

15. Procédé de production continue de polyétheralcools selon l'une quelconque des revendications précédentes, dans lequel la température pendant la réaction est d'au moins 125 °C.

16. Procédé selon l'une quelconque des revendications précédentes, dans lequel le catalyseur est introduit sous la forme d'un solide ou d'une pâte ou sous la forme d'une charge liquide comme une masse fondue, ou dissous dans un solvant ou de l'eau ou mélangé avec une autre charge liquide dans le réacteur.

17. Procédé de production continue de polyétheralcools selon l'une quelconque des revendications précédentes, dans lequel au moins un des composés amorceurs à fonctionnalité hydrogène est solide à température ambiante.

18. Procédé de production continue de polyétheralcools selon la revendication 17, dans lequel le composé amorceur à fonctionnalité hydrogène solide est transformé en une pâte, et dans lequel cette pâte est ajoutée en continu à la cuve du réacteur.

19. Procédé de production continue de polyétheralcools selon la revendication 18, dans lequel la pâte est fabriquée par mélange du composé amorceur à fonctionnalité hydrogène solide à température ambiante avec un composé liquide à température ambiante ou à température élevée.

20. Procédé de production continue de polyétheralcools selon l'une quelconque des revendications précédentes, dans lequel au moins un composé amorceur à fonctionnalité hydrogène est choisi dans le groupe constitué par les composés à fonctionnalité NH et OH, et les mélanges de ceux-ci.

21. Procédé de production continue de polyétheralcools selon l'une quelconque des revendications précédentes, dans lequel au moins un composé amorceur à fonctionnalité hydrogène est choisi dans le groupe constitué par les composés à fonctionnalité NH.

22. Procédé de production continue de polyétheralcools selon l'une quelconque des revendications précédentes, dans lequel au moins un composé amorceur à fonctionnalité hydrogène est choisi dans le groupe constitué par les composés à fonctionnalité OH.

23. Procédé de production continue de polyétheralcools selon la revendication 22, dans lequel les composés à fonctionnalité OH sont choisis dans le groupe constitué par la pentaérythrite, la sorbite, le saccharose, la cellulose, l'amidon, les hydrolysats d'amidon, l'eau, la glycérine, l'éthylène glycol (EG), le diéthylène glycol (DEG), le propylène glycol (PG), le dipropylène glycol (DPG), le butanediol, les polyétherols, et les mélanges de ceux-ci.

24. Procédé de production continue de polyétheralcools selon la revendication 21, dans lequel les composés à fonctionnalité NH sont choisis dans le groupe constitué par les amines aliphatiques, les amines aromatiques, les aminoalcools, et les mélanges de ceux-ci.

25. Procédé de production continue de polyétheralcools selon la revendication 21, dans lequel les composés à fonctionnalité NH sont choisis dans le groupe constitué par l'éthane-1,2-diamine (EDA), l'éthanolamine, la diéthanolamine, les aminophénols, l'aminotoluène, la toluènediamine (TDA), l'aniline, la 4,4'-méthylènedianiline (MDA), la 4,4'-méthylènedianiline polymère (PMDA), la mélamine, la phénylcyclohexylamine.

26. Procédé de production continue de polyétheralcools selon l'une quelconque des revendications précédentes, dans lequel au moins un composé amorceur à fonctionnalité hydrogène est choisi dans le groupe constitué par les composés avec une fonctionnalité moyenne supérieure à 3,5.

27. Procédé de production continue de polyétheralcools selon l'une quelconque des revendications précédentes, dans lequel au moins un oxyde d'alkylène est choisi dans le groupe constitué par l'oxyde d'éthylène, l'oxyde de propylène, l'oxyde de butylène, et les mélanges de ceux-ci, de préférence les mélanges contenant de l'oxyde de propylène.

28. Procédé de production continue de polyétheralcools selon l'une quelconque des revendications précédentes, dans lequel un oxyde d'alkylène est utilisé, et dans lequel cet oxyde d'alkylène est l'oxyde de propylène.

29. Procédé de production continue de polyétheralcools selon l'une quelconque des revendications précédentes, dans lequel au moins un réacteur à cuve agitée en continu (CSTR) est utilisé.

30. Procédé de production continue de polyétheralcools selon l'une quelconque des revendications 1 à 28, dans lequel une série de réacteurs à cuve agitée en continu (CSTR) ou de réacteurs à écoulement piston (PFR) ou une combinaison des deux types de réacteurs est utilisée, ayant de multiples alimentations en matières premières ou sorties de produits de la série de réacteurs.

31. Procédé de production continue de polyétheralcools selon l'une quelconque des revendications 1 à 28, dans lequel une série de réacteurs à cuve agitée en continu (CSTR) ou une combinaison de CSTR avec des réacteurs à écoulement piston (PFR) est utilisée, ayant de multiples alimentations en matières premières ou sorties de produits de la série de réacteurs.

32. Procédé de production continue de polyétheralcools selon l'une quelconque des revendications précédentes, dans lequel des polyétheralcools avec un indice d'OH < 1000 mg KOH/g sont produits.
